# EUROPÄISCHE PATENTANMELDUNG

(11) **EP 1 447 794 A1**
(43) Veröffentlichungstag der Anmeldung: **18.08.2004**
(21) Anmeldenummer: 03002679.3
(22) Anmeldetag: 12.02.2003
(51) Int. Cl.: G10L 17/00

(54) **Kontinuierliche Sprecherüberprüfung mittels Spracheingabe**

(71) Anmelder: Kuebler, Hans, Dr., 82205 Gilching (DE)
(72) Erfinder: Kuebler, Hans, Dr., 82205 Gilching (DE)

(57) **Zusammenfassung**

Die Benutzung eines Telefons als Zugangsterminal zum Intranet/Internet mittels der Sprachkommunikation ist einerseits sehr komfortabel, eröffnet jedoch andererseits auch neue Möglichkeiten des unbefugten Zugriffs. Dieser kann insbesondere dadurch entstehen, dass eine Session de facto unterbrochen wird, die aufgebaute Verbindung zu dem/den Server(n) jedoch nicht, sodass die bestehende Einwahl mit der Autorisierung bestehen bleibt. Dies kann insbesondere bei der Spracheingabe geschehen, da es durchaus sinnvoll erscheint, diese Art des Zugriffs auf das Intranet/Internet auch dann zu benutzen, wenn zuzüglich am Schreibtisch Akten bearbeitet werden z. B., sodass der Nutzer nicht immer sich im klaren ist, ob der Zugang noch aktiv ist oder nicht.

Die Erfindung ermöglicht nun kontinuierlich oder in unregelmäßigen oder auch regelmäßigen zeitlichen Abständen die Authentisierung der Person dadurch zu überprüfen, dass ― erfindungsgemäß ― das Profil der Sprache der bedienenden Person mit dem spezifischen gespeicherten Profil der Person verglichen wird, die unter der Anmeldung sich autorisiert hat. Dies setzt jedoch voraus, dass das System der Spracheingabe mit personenspezifischen Sprachprofilen arbeitet.

## Beschreibung

### 1. Welches Problem soll durch die Erfindung gelöst werden?

Mit dem Zugang zu Internet und E-Mail oder zu anderen IP- basierten Diensten über Telefonverbindungen im Festnetz und im mobilen Netz entstanden und entstehen Sicherheitsprobleme, die bisher nur mit unzureichenden technischen Hilfsmitteln behandelt werden können. Gerade mit der Einführung des mobilen Internets und des sprachlichen Zugangs zu Internet- und Intranetinformationen entstehen folgende zusätzliche Probleme:
- Verbindungen über das Telefon zum Internet werden von nicht autorisierter Seite oder zum falschen Gesprächspartner neu aufgesetzt, so dass Information unrechtmäßig erworben werden kann.
- Zusätzliche Einwahl nicht autorisierter Teilnehmer in eine laufende Sitzung per Telefon z.b. durch eine Konferenzschaltung, so dass eine laufende Sitzung gestört wird, bzw. ebenfalls unrechtmäßig Information erworben werden kann.
- Fehlerhafte Zuordnung von Abrechnungsdaten durch Zugriff auf Informationen von mehreren im einzelnen nicht ausreichend spezifizierten Seiten, so dass eine spätere eindeutige und dauernde Zuordenbarkeit von Abrechnungsdaten für eine nachgeschaltete genaue, differenzierte Abrechnung der durchgeführten Aktionen nicht mehr möglich ist.
- Keine statistischen Aussagen über die Benutzungsweisen eines Sprechers von Systemfunktionen, sofern dieser Sprecher nicht eindeutig vom System getrennt erfasst wird.
- Bei lang andauernden Sessions nicht nur in einem geschlossenen Raum mit eventuell begrenztem Zutritt, sondern bei Bewegung zum Beispiel im Auto ist eine damit sinnvoller Weise erforderliche andauernde Kontrolle bzw. Überprüfung und Verifikation einer durchgeführten Authentisierung und Identifikation bis heute nicht realisiert.
- Durch den Zugriff auf zentrale Benutzerdatenbanken entsteht eine große Abhängigkeit von der Verfügbarkeit von Serversystemen. Bei Nichtverfügbarkeit ist eine wiederholte Benutzeridentifikation nicht möglich (die Authentisierungs- und Identifikationsinformation liegt aus Sicherheitsgründen auf zentralen Servern).
- Nachweisführung für durchgeführte Aktionen eines Anrufers und Internetnutzers, der aufgrund einer Anruferkennung (z.b. der MSISDN eines Mobiltelefons) zwar identifiziert wurde und damit als authentisiert gilt, aber im nachhinein die Aktionen abstreitet (z.b. weil das Telefon gestohlen worden sei).

### 2. Wie wurde dieses Problem bisher gelöst?

Heutige Authentisierungsverfahren basieren hauptsächlich auf der Eingabe eines persönlichen Authentifizierungscodes (PIN), wie er auch im Bankenumfeld üblich ist. Beim Einschalten eines Mobiltelefons wird immer eine PIN- Angabe abgefragt. Diese PIN wird innerhalb des Telefons mit der Chipkarte überprüft. Danach ist die Benutzung des Telefons ohne weitere Einschränkungen möglich. Für die Authentisierung von Web-Diensten, die mit einem Festnetztelefon oder mit einem Mobiltelefon genutzt werden können, wird das gleiche Verfahren benutzt. Im Normalfall wird für jeden Service (Internetzugang, Zugang zum Bankkonto) eine weitere PIN vergeben. Die PINs werden in Abhängigkeit vom Service lokal überprüft (siehe Mobiltelefon) oder auf dem angeschlossenen Server. Wegen der Abhörmöglichkeiten wird häufig die PIN durch eine zeitabhängige Komponente ergänzt (Verfahren RLA). Hier werden zeitabhängige Zufallszahlen mit einer PIN verbunden zur Überprüfung genutzt, ob der Verbindungsaufbau oder der Netzzugang berechtigt ist. Im mobilen Umfeld (aber auch in Festinstallationen) kann die Sprechererkennung zur Authentisierung und/oder zur Berechtigungsprüfung genutzt werden. In der Druckschrift US 6 073 101 wird vorgeschlagen, die Sprache zur Authentisierung und/oder zur Berechtigungsprüfung zu benutzen mittels eines technischen Verfahrens zur Sprechererkennung, das speziell auf Merkmalsvektoren basiert. Bei den heute angewandten Verfahren erfolgt die Überprüfung nur einmal, am Anfang oder vor einem Funktionszugriff. So wird in der o. g. US- Druckschrift zwar auch die Möglichkeit einer "substantially" (also quasi-) kontinuierlichen Überprüfung der Berechtigung erwähnt, jedoch mit dem Zusatz, dass sich der "Overhead" wesentlich dadurch erhöht. Doch wird damit auch nach dieser Druckschrift nichts wesentlich anderes erreicht, als dass, wie bei Banktransaktionen, bei denen transaktionsspezifische PINs (TANs) eingesetzt werden und die damit eine feiner granulare Überprüfung erlauben, je Zugriff eine sprachbasierte Überprüfung erfolgt. Eine allgemeine noch feinere granulare Überprüfung der Nutzungsberechtigung ist wegen des damit verbundenen Aufwands nach den bisherigen Vorstellungen nicht realisierbar (fehlende Benutzerakzeptanz).

Auf Basis von Smartcards werden heute Verfahren entwickelt, die eine kontinuierliche Überprüfung erlauben, da die Smartcard ständig im Zugangssystem (z. b. einem angeschlossenen PC) verbleibt. Hier bleibt das Problem der fehlenden Standardisierung der genutzten Zugangsmedien. Z.B. werden in Mobiltelefonen andere Chipkarten genutzt als in PCs. Dies ist jedoch ebenfalls nur eine Identifizierung der Smartcard und nicht des Benutzers.

Besonders hervorzuheben ist bei all diesen Verfahren die Abhängigkeit der Authentisierung oder Berechtigungsprüfung vom Zugriff auf Datenbanken mit hinterlegten Informationen zum Benutzer (also der zu prüfenden Person). Bei feinerer granularer Überprüfung kann der Server so belastet werden, dass er in seiner Verfügbarkeit eingeschränkt wird und somit die Funktion der Zugriffsberechtigung nicht mehr ausgeführt werden kann oder sehr große Datenbanken mit entsprechend hohen Verfügbarkeitsgarantien a priori bereit gestellt werden müssten. Diese Anforderung ist bei einer hohen Zahl von Benutzersitzungen nur mit sehr hohem Aufwand erfüllbar und somit nicht wirtschaftlich.

Zusammenfassend lässt sich damit sagen, dass die in Kapitel 1 angesprochenen Probleme nach dem heutigen Stand der Technik gar nicht oder nur unzureichend, d.h. mit sehr großem Aufwand gelöst werden können.

### 3. In welcher Weise löst die Erfindung das angegebene technische Problem?

Mit dem Fortschritt von Spracherkennungsverfahren verbessern sich auch die Möglichkeiten ihrer Nutzung zur Sprecherüberprüfung oder -verifikation. Unter Sprecherüberprüfung oder - verifikation soll an dieser Stelle die *relative* Prüfung eines Sprechers verstanden werden, nachdem bereits in einem vorgeschalteten Schritt ein Sprecher bzw. Nutzer als berechtigt identifiziert und authentisiert wurde.

Gerade mit dem wachsenden Einsatz von Sprachinteraktionen zum Zugang zu E-Mail oder anderen Informationen kann die laufende Spracheingabe automatisch zur kontinuierlichen Sprecherüberprüfung oder -Verifikation genutzt werden. Dabei geht es speziell darum, einen bereits authentisierten Sprecher kontinuierlich nach signifikanten Veränderungen zu überprüfen (d. h. nicht immer wieder den Sprecher neu zu authentisieren!). Damit wird der hohe Aufwand der häufigen Sprecherauthentisierung vermieden und mit den sowieso angewandten Standardtechniken zur Spracherkennung kann mit geringerem Zusatzaufwand eine wirklich kontinuierliche Überprüfung erfolgen, nämlich, ob es denn immer noch der anfangs autorisierte Sprecher ist oder ob sich etwas Signifikantes verändert hat. Der Ressourcenbedarf kann zusätzlich mit einer semi-kontinuierlichen Sprecherüberprüfung oder - verifikation (z. b. stochastisch bzw. in bestimmten, dem jeweiligen Sicherheitsbedürfnis angepassten, Zeitintervallen) verringert werden. Dies entspricht auch dem menschlichen Verhalten, dass eine signifikante Veränderung der vom Ohr erfassten Sprache sofort zu einer Steigerung der Aufmerksamkeit des Zuhörers führt.

Auch in zukünftigen konvergenten IP-basierten Netzen kann die Sprecherüberprüfung oder - verifikation auf Basis der so eingesetzten standardisierten Spracherkennungstechnologie verstärkt eingesetzt werden, um
- Eine kontinuierliche Sprecherprüfung *ohne* Zugang zu entsprechend aufwändigen Serversystemen mit den vorgegebenen Benutzerinformationen (wie z. b. mit Hilfe von Merkmalsvektoren entsprechend Druckschrift US 6 073 101 vorgeschlagen) zu ermöglichen,
- Unabhängig von spezifischen Tokens (Smartcard, Fingerprintdetektoren) zu werden,
- Kontinuierlich die Zugangsprüfung durchzuführen,
- Nachträgliche Nachweise über den Benutzer eines Systems oder von Systemfunktionen zu führen,
- Kompatibel zu den heute gebräuchlichen Authentisierungsverfahren zu bleiben.

Dazu ist lediglich eine parallele Spracheingabe zu den laufenden datenbasierten Interaktionen notwendig. Aufgrund der Netzkonvergenz kann für die Sprache das gleiche Protokoll (IP) mit den gleichen physikalischen Schnittstellen genutzt werden. Zu bemerken ist auch, dass zur Vermeidung des Wiedereinspielens aufgenommener Sprache der abgefragte Inhalt zeitlich variiert werden kann.

### 5. Ausführungsbeispiel der Erfindung

Der Zugang zu E-Mails ist heute bereits vom Auto aus möglich (z. b. BMW). Dabei wird eine Verbindung über das Internet zu Mail-Service-Anbietern aufgebaut. Die Mails werden dem Teilnehmer im Auto vorgelesen und durch die Eingabe von Kommandos kann die Mailbearbeitung durchgeführt werden (z. b. Rückruf an den Absender einer vorgelesenen Mail).

Die Eingabe der Kommandos wird über Spracherkennungshardware (bzw. -software) in geeignete Kommandos an das Mailsystem umgewandelt. Bei der Umwandlung kann das eingegangene Sprachsignal auf vorgegebene Merkmale untersucht werden (Modulation, zeitliche Eigenschaften) bzw. mit vorhandenen Beispielen des Sprechers verglichen werden. Bei Abweichung können Maßnahmen angestoßen werden (z. b. Abfrage einer speziellen Geheimzahl, Vergleich von Merkmalen einer Spracheingabe mit einem gespeicherten Sprachprofil, o.Ä)¹.
¹ Die Art der Sprachanalyse bzw. die genutzten Sprechermerkmale sind nicht Gegenstand des Patentanspruchs.

Anhand des folgenden Aufbaus kann die Nutzung der Patentidee nachvollzogen werden:

Von einem mobilen Endgerät (z. b. Siemens S35 oder Siemens SX45)² wird die Verbindung zu einem Sprachserver aufgebaut. Dazu kann jedes Festnetz oder mobile Netz eines Telekommunikationsanbieters (DTAG, Vodafone, Mannesmann, O2, ...) genutzt werden. Durch Roaming- Abkommen der Netzanbieter kann diese Funktion auch international genutzt werden (z. b. mobiler Zugang via Voicestream in den USA zu Diensten in Deutschland).
² Siehe Zugangsseite ([1]) des beigefügten Ablaufschemas: Benutzerzugang über jegliche Art von Gerät sofern die Möglichkeit zur Spracheingabe gegeben ist. Erstauthentisierung durch PIN-basiertes Verfahren oder biometrisches Verfahren wie Sprechererkennung, Retinascreening etc..

Der Sprachserver³ besteht aus folgenden Komponenten:
- ein Standard Computersystem wie z. b. ein Fujitsu Siemens PRIMEPOWER Solaris System oder ein Fujitsu Siemens PRIMERGY NT System
- ein Kommunikationsboard wie z. b. ein ISDN/E1-Board von Ferma, Paris oder ein ISDN/E1-Board von NMS. Diese Boards unterstützen die Terminierung von Telefongesprächen und die Bearbeitung von eingehenden HDLC-Paketen, die eingehende Sprachnachrichten in digitalisierter Form enthalten; die Form der Sprachdigitalisierung wird durch internationale Standards festgelegt.
- Ein DSP-Board z. b. von Ferma, Paris oder von NMS zur Bearbeitung von Sprachnachrichten auf Basis von HDLC-Paketen
- Software von Nuance und Lemout & Hauspie zur Erkennung von Wörtern aus digitalisierter, kontinuierlicher Sprache und Generierung von digitalisierter Information im ASCII-Format bzw. zur Generierung von Sprache aus digitalen Informationen (Wörtern) im ASCII-Format
- Einer Steuersoftware z. b. I@C von Siemens Business Services oder VoiceXML der Firma PipeBeach, Schweden zur Verbindung von Backend-Softwaresystemen mit den Telephonie- Frontendsystemen. Die Steuersoftware stellt erkannte Informationen für Backend-Anwendungen zur Weiterverarbeitung zur Verfügung; umgekehrt kann die Steuersoftware Informationen aus der Anwendungssoftware in gesprochene Informationen umsetzen, die über die angeschlossenen Kommunikationsboards am Telefonendgerät gehört werden können.

³ Siehe Terminierungspunkt ([2]) des beigefügten Ablaufschemas: Terminierungspunkt für "anrufende" Benutzer mit Sprachmenüsteuerung, Authentisierung etc. Dient als zentrale Verteilstation für Benutzeranfragen auf geeignete (Backend-)Serversysteme und kann auch zum Zwischenspeichern für Daten aus anderen Servern ([3]) genutzt werden. Kontinuierliche Authentisierung kann am Terminierungspunkt oder auf speziellen Authentisierungsservern ([3]) erfolgen.

Die Anwendungen laufen üblicherweise auf abgesetzten Servern⁴. Die Anwendungen sind meist bereits über herkömmliche Interaktionsmethoden (WWW oder dedizierte Interaktionssoftware) erreichbar, z. b. über ein Bankterminal oder durch Web-Zugriffe von Heim-Computern.
⁴ Siehe Datenserver des beigefügten Ablaufschemas: Wenn die kontinuierliche Sprecherüberprüfung oder - verifikation am Terminierungspunkt ausgeführt wird, so wird, entsprechend den Vorgaben, der Benutzer aufgefordert, geeignete Spracheingaben zu machen, die dann auf Übereinstimmung mit benutzerspezifischen Parametern in den u.U. dynamisch aufgebauten Authentisierungsprofilen (siehe [4]) überprüft werden. Die Vorgaben können sich beziehen auf zeitlichen Abstand, Wiederholrate, Benutzerinformationen, Testphrasen, Toleranzen o.Ä. Der Datenserver kann neben der Authentisierung viele weitere Aufgaben übernehmen und ist üblicherweise nicht auf einen Computer beschränkt.

Teil jeden Zugangs zu Anwendungsservern ist die Identifikation und Authentisierung der Benutzer. Der übliche Ablauf ist wie folgt:
- Anmelden durch Angabe einer Benutzer-ID: dies kann am Telefon erfolgen durch Wählen einer benutzerspezifischen Nummer oder, nach Wählen einer einheitlichen Zugangsnummer, die Eingabe einer Benutzer-ID durch DTMF (Dialtone Multifrequency) Ziffernfolgen; die Benutzer-ID wird dann durch die oben genannte Steuersoftware ausgewertet zur Bereitstellung eines benutzerspezifischen Profils (bei Anwahl einer benutzerspezifischen Nummer kann das Profil mit der Nummer direkt assoziiert werden).
- Danach wird der Benutzer nach einem Passwort oder einer PIN gefragt, die wiederum per DTMF oder per Sprache eingegeben werden kann (z. b. jedes Zeichen der PIN einzeln). Die Steuersoftware vergleicht die eingegebene PIN (oder eine verschlüsselte Version davon) mit der abgespeicherten PIN aus dem Benutzerprofil und erlaubt den Zugriff bei Übereinstimmung oder weist den Zugriff ab bei Differenz. Alternative bekannte Authentisierungsverfahren verbinden die PIN-basierte Authentisierung mit der Eingabe von automatisch erzeugten Zufallszahlen.
- **Während der Authentisierung und/oder Identifikation werden geeignete Merkmalsinformationen für den Sprecher aufgebaut, die dann im Rahmen der kontinuierlichen Sprecherüberprüfung oder -Verifikation benutzt werden.**

Nach der beschriebenen Identifikation und Authentisierung kann die Server- oder Dienstnutzung durch die kontinuierliche Sprecherüberprüfung oder -Verifikation nach den oben geschriebenen Ansprüchen erheblich sicherer gemacht werden. Dazu wird nach der Authentisierung und Erstidentifikation ein dem Benutzer zugeordnetes Sprecherprofil geladen oder wie oben beschrieben (fett gedruckt) dynamisch aufgebaut. In der weiteren, sprachbasierten Interaktion des Benutzers mit der Anwendung oder dem System (z.B. durch Eingabe von Kommandos an das Mailsystem) kann die eingegebene Sprachinformation mit dem geladenen oder erstellten Profil verglichen werden. So wird sichergestellt, dass der ursprünglich identifizierte und authentisierte Benutzer weiterhin mit dem System oder der Anwendung kommuniziert und nicht fälschlicherweise ein nicht authentisierter Benutzer die Sitzung übernommen hat.

Die Merkmale können entsprechend der Ansprüche 2 bis 3 dynamisch modifiziert und angepasst werden, um die kontinuierliche Überprüfung/Verifikation bezüglich Sicherheit und Genauigkeit zu optimieren.

Sollte ein anderer Benutzer sich auf legale oder illegale Weise in die Session eingewählt haben, werden sich die für ihn berechneten Sprachmerkmale von den Merkmalen des ursprünglich geladenen Profils unterscheiden, so dass die Vorspiegelung falscher Identitäten verhindert werden kann.

Durch die Einbeziehung der Sprecherüberprüfung oder -verifikation kann der Sprecher kontinuierlich überprüft werden, ohne dass dahinter liegende Anwendungen davon Kenntnis haben (müssen) oder beeinflusst werden. Dies kann wie folgt geschehen:
- Aus den sich wiederholenden Strömen von gesprochenen Informationen des bereits authentisierten Benutzers zieht der oben eingeführte Sprachserver dynamisch, zufällig oder in festen Abständen, Teile heraus, die zur Berechnung von Sprechercharakteristiken herangezogen werden.
- Da, wie oben beschrieben, die Sprechermerkmale initial bereits geladen wurden oder neu erstellt wurden, können verschiedene Strategien, entsprechend dem Sicherheitsbedarf der Anwendung, bei der Ermittlung der Charakteristiken angewandt werden. Diese können von der oben beschriebenen Steuerlogik dynamisch ausgewählt und angepasst oder auch in Kombination verwendet werden. Einerseits kann, bei einer vorher bestimmbaren Menge von einzugebenden Begriffen und Wörtern, die wortbezogene Charakteristikermittlung durchgeführt werden. Die Wörter, bzw. ihre sprecherbezogenen Charakteristiken, können dann z.b. bereits vorher im Profil abgelegt sein. Alternativ kann, bei nicht fester Wortwahl, eine Teilmenge wahrscheinlicher Begriffe gebildet werden, die analog der festen Wortwahl behandelt werden. Schließlich kann die Ermittlung der Sprechercharakteristiken völlig unabhängig von einer festen Auswahl von Wörtern erfolgen.

Unabhängig von der Durchführung der kontinuierlichen Sprecherüberprüfung oder - verifikation können die Steuerungsparameter der Identifikation über einfache Web-Interaktionen eingestellt und dem Benutzer angepasst werden⁵ (entweder vom Benutzer selbst oder vom verantwortlichen Administrator). Dies geschieht durch Bereitstellung geeigneter Web-Seiten auf einem speziellen Server oder auf einem der bereits genannten Server (Server Side, Data-Server Side). Übliche Verfahren dazu sind HTML, XML mit geeigneten Editoren wie sie z. B mit bekannten Browsern wie dem Internet Explorer oder Netscape mitgeliefert werden. Die Benutzerparameter werden in Profilen in einer Datenbank oder in einfachen indexierten Dateisystemen abgelegt für den Zugriff durch Server Side oder Data-Server Side (im Falle des initialen Ladens der Profile oder zur Steuerung der dynamisch zu erstellenden Profile).
⁵ siehe Management-Server (Punkt [4]) des beigefügten Ablaufschemas: Die Authentisierungseigenschaften (Authentisierungsprofil je Benutzer) können über einen geeigneten Management-Server (üblicherweise über eine Web-basierte Schnittstelle) entsprechens den Benutzeranforderungen eingestellt werden

Die Oberflächen können individuell gestaltet werden, ohne die kontinuierliche Sprecherüberprüfung oder -verifikation inhaltlich zu verändern. Die eigentliche Steuerung erfolgt über die zu administrierenden Parameter. Dazu können gehören (abhängig von der konkreten Ausgestaltung):
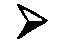 Toleranzbreiten der Stimmerkennung
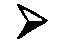 Abzufragende Stichworte
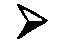 Wiederholrate der Spracheingabe
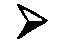 Vorgabe von Referenzwörtern oder -Phrasen
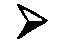 Und viele weitere...

Die Parameter werden für das initiale Profil abgefragt und bei der Implementierung der Überprüfungsstrategie umgesetzt. Ist der zuständige Server mit den Benutzerinformationen nicht verfügbar, so können Standardparameter genutzt werden. Dies ist z. b. dann sinnvoll, wenn eine Authentisierung gar nicht notwendig ist, sondern lediglich sichergestellt werden soll, dass während einer Sitzung immer der gleiche Benutzer die Sitzung bestreitet.

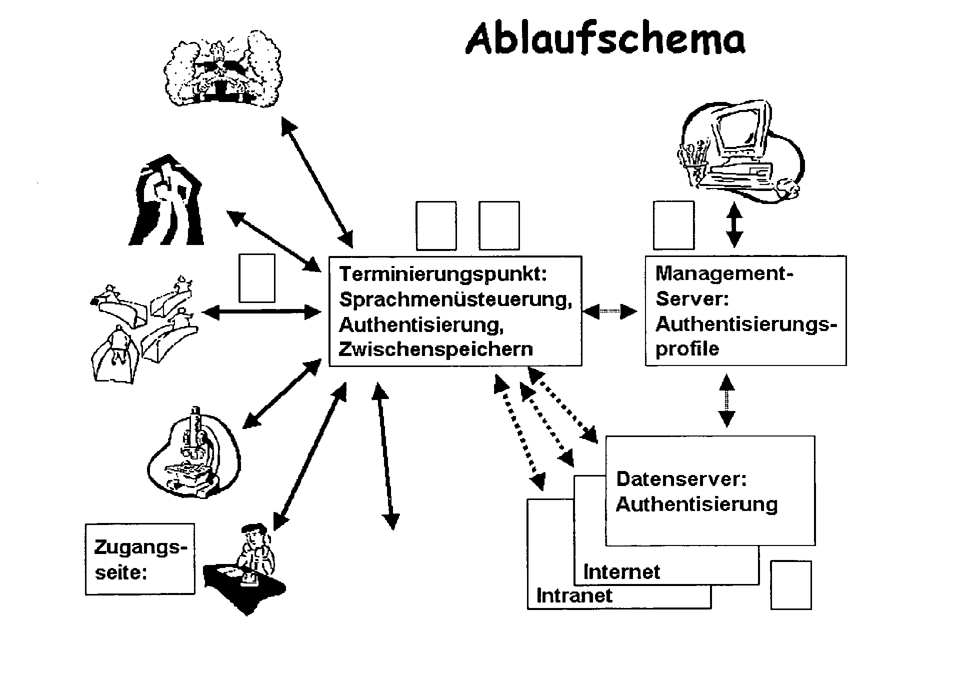

Die kontinuierliche relative Überprüfung oder Verifikation eines Benutzers von Serversystemen oder serverbasierten Diensten mittels personenspezifischer Spracheingabe, ist dadurch gekennzeichnet, dass:

## Patentansprüche

1. nach einer anfangs wie auch immer erfolgten absoluten Authentisierung und Identifikation eines Sprechers kontinuierlich oder in regelmäßigen oder stochastisch unterschiedlichen Zeitintervallen parallel zu einer Benutzersitzung mögliche signifikante Änderungen beim Sprachempfang erfasst werden und zu einer relativen (also bezogen auf den zunächst authentisierten und identifizierten Sprecher) Sprecherüberprüfung oder -Verifikation genutzt werden.

2. die kontinuierliche relative Sprecherüberprüfung oder -verifikation nach Anspruch 1 unabhängig von einer zentralen Datenbank zur Benutzerüberprüfung durchgeführt wird, sondern dynamisch im Verlauf einer authentisierten Sitzung geeignete Merkmalsinformationen aufgebaut und überprüft werden.

3. die kontinuierliche relative Sprecherüberprüfung oder -Verifikation nach Anspruch 2 mit zeitlich und inhaltlich variierenden Inhalten durchgeführt wird. Die Inhalte werden vorzugsweise durch neutrale Sprachgeneratoren erstellt und dem Zugangssuchenden zu seiner Überprüfung vorgesprochen.

4. die kontinuierliche relative Sprecherüberprüfung oder -Verifikation nach Anspruch 2 dazu genutzt werden kann, dynamisch aufgebaute Sprechercharakteristika zum Nachweis der Nutzung durch den identifizierten Benutzer oder einer fehlerhaften Nutzung mit anderen Gesprächsinformationen abgelegt werden.

5. der sich variierende Text der kontinuierlichen relativen Sprecherüberprüfung oder -Verifikation nach Anspruch 3 aus einem Text einer zuvor durchgeführten oder parallel laufenden Session nach Zufallsprinzipien in geeigneter Weise ausgewählt wird und/oder aus einer sich nach einem nachvollziehbaren Algorithmus ausgewählten Information besteht, die nur dem Sprecher bekannt ist und die dann gesprochen werden muss.
